# EUROPÄISCHE PATENTSCHRIFT

(11) **EP 2 355 232 B1**
(45) Veröffentlichungstag und Bekanntmachung des Hinweises auf die Patenterteilung: **20.03.2013**
(21) Anmeldenummer: 11151666.2
(22) Anmeldetag: 21.01.2011
(51) Int. Cl.: H01M 10/50, F28F 3/02

(54) **Wärmeübertrager für ein Wärmeleitmodul**
Thermal conductor for thermal conduction module
Caloporteur pour un module de conduction thermique

(30) Priorität: 05.02.2010 DE 102010001623
(43) Veröffentlichungstag der Anmeldung: 10.08.2011
(73) Patentinhaber: Behr GmbH & Co. KG, 70469 Stuttgart (DE)
(72) Erfinder: Isermeyer, Tobias, 74245 Löwenstein (DE); Heckenberger, Thomas, 70771 Leinfelden-Echterdingen (DE); Eckstein, Jürgen, 71409 Schwaikheim (DE); Lorenz, Roman, 71083 Herrenberg (DE)
(74) Vertreter: Grauel, Andreas

(56) Entgegenhaltungen:
- EP-A1- 2 187 473
- DE-A1-102008 034 880
- DE-B3-102007 010 743
- JP-A- 2008 204 990
- US-A- 5 756 227
- US-A1- 2003 173 068

## Beschreibung

Die vorliegende Erfindung bezieht sich auf einen Wärmeübertrager zum Übertragen von Wärme zwischen einer elektrochemischen Energiespeichereinheit und einem Kühlmittel.

Die DE 195 28 118 beschreibt den Aufbau von Kühlplatten aus Blechpaketen. Es handelt sich dabei um mehrere aufeinander gestapelte Platten, von denen wenigstens eine mit strömungskanalbildenden Durchbrüchen versehen ist. Durch diesen Ansatz wurde es möglich, Kanalstrukturen in Kühlplatten ohne eine spanabhebende Bearbeitung zu realisieren, was eine deutliche Absenkung der Herstellkosten ermöglicht.

Die DE 43 14 808 beschreibt den Aufbau von Plattenwärmeübertragern aus wannenförmigen Gleichteilen, die durch 180° Versatz zu einem Fluid-Fluid-Wärmeübertrager aufgestapelt werden können. Die Besonderheit liegt hier im Gleichteilprinzip.

Die DE 10 2007 009315 beschreibt eine thermische Anbindung von Batteriezellen an einen Kühlkörper mittels Stoffschluss. Der Stoffschluss wird mittels Verguss der Batteriezellen mit dem Kühlkörper erzielt.

Bei den derzeit eingesetzten Kühlplatten werden für die Darstellung der Schichtblechstrukturen für Großserienanwendungen vergleichsweise viele kostenintensive Stanzwerkzeuge benötigt, so dass das Produkt im Wettbewerb Nachteile erfahren kann Auch sind Gewicht und Materialeinsatz in der aktuellen Ausführung von Schichtblechplatten nach DE 195 28 116 noch eher dem Fertigungsverfahren geschuldet, als dass diese tatsächlich für die Funktion immer notwendig wären.

Die beispielsweise in der DE 10 2007 009315 beschriebene thermische Anbindung der Batteriezellen an das Wärmeleitelement erfordert bei Zellbauformen mit ungünstigen Wärmeleiteigenschaften eine Verwendung zusätzlicher Wärmeleitelemente. Es ist vergleichsweise aufwendig, diese Wärmeleitelemente pass- und positionsgenau auf der Kühlplatte zu fixieren, um Wärmeleitelement und Kühlplatte einstückig auszuführen. Insbesondere kann bei einer Verwendung von Dreieckrippen oder Ähnlichem eine Einhaltung der rotatorischen Positionstreue schwierig sein.

Die DE 10 2008 034 880 A1 offenbart ein Wärmeleitmodul, das eine Grundplatte und eine Mehrzahl von Erhebungen aufweist, die jeweils mit einem Endbereich mit einer Hauptfläche der Grundplatte verbunden und so voneinander beabstandet sind, dass die mindestens eine elektrochemische Energiespeichereinheit zwischen benachbarten Erhebungen angeordnet sein kann. Gleiches gilt für die DE 10 2007 010 743 B3.

Die US 2003/0173068 A1 offenbart eine Wärmetauscherplatte, die auf der Unterseite berippt ist.

Es ist die Aufgabe der vorliegenden Erfindung, einen verbesserten Wärmeübertrager zu schaffen.

Diese Aufgabe wird durch einen Wärmeübertrager gemäß Anspruch 1gelöst.

Der erfindungsgemäße Ansatz basiert auf einer Weiterentwicklung einer kosteneffizienten Kühlplatte eines Wärmeübertragers zur Kühlung insbesondere von Li-Ion-Batterien und EE-Komponenten. Dabei wird auf eine Unterstützung der zellseitigen Wärmeleitung sowie auf eine Verbesserung des thermischen Durchlasswiderstandes durch eine Vergrößerung der metallischen Kontaktflächen geachtet.

Erfindungsgemäß kann an einem Stoffschluss oder Verguss von Batteriezellen mit dem Kühler, festgehalten werden, allerdings vorzugsweise nur noch im Anbindungsbereich und nicht mehr über die vollständige Höhe. Für eine Kühlung von Batteriezellen kann eine Wärmesenke bzw. Kühlplatte dargestellt werden. Eine Darstellung einer thermisch günstigen Schnittstelle kann durch Stoffschiuss erzielt werden. Zur Anwendung kommen kann das Schichtblechprinzip auf Batteriekühlplatten mit zusätzlichen Wärmeleitelementen. Dabei kann ein hinsichtlich der Bauform und des Fertigunsverfahrens verbesserter Wärmeübertrager geschaffen werden.

Der vorliegenden Erfindung liegt die Erkenntnis zugrunde, dass eine Batteriekühlplatte nach dem Grundprinzip eines Plattenwärmeübertragers ausgeführt sein kann, wobei der Wärmeübergang zwischen einem Fluid und einem Festkörper im Fokus steht,

Teil des erfindungsgemäßen Ansatzes ist unter anderem auch ein symmetrisches Schichtblechdesign. Aufgrund einer symmetrischen Verwendbarer eines Kanalblechs des hier vorgeschlagenen Wärmeübertragers, das als Gleichteil in verschiedenen Positionen verwendet werden kann, können die Werkzeugkosten gesenkt werden.

Ein Zusammenfügen von zwei gegeneinander gedreht positionierten Kanalblechen ergibt eine Kanalführung, in der ursprünglich für die Stabilität des Blechs im Fertigungsprozess notwendige Stege zusätzlich eine Turbuiatorfunktbn für ein Kühlmittel übernehmen können.

Vorteilhafterweise entsteht ein wirtschaftlicher Vorteil durch die Verwendung von weniger Teilen, nämlich Rippenmodulen, und weniger Werkzeugen aufgrund der Symmetrie der Kanalbleche. Technisch ergeben sich gegenüber Extrusionsprofilen durch das Einbringen einer Turbulatorgeometrie in Form der Verbindungsstege Vorteile im Wärmeübergang sowie eine flexiblere, Stromführung.

Die vorliegende Erfindung schafft einen Wärmeübertrager zum Übertragen von zwischen mindestens einer elektrochemischen Energiespeichereinheit und einem Kühlmittel mit folgenden Merkmalen: einem Wärmeleitmodul, das eine Grundplatte und eine Mehrzahl von Erhebungen aufweist, die jeweils mit einem Endbereich mit einer Hauptfläche der Grundplatte verbunden und so voneinander beabstandet sind, dass die mindestens eine elektrochemische Energiespeichereinheit zwischen benachbarten Erhebungen angeordnet sein kann; einem ersten Kanalblech, das eine Anordnung von durch Stege getrennten Aussparungen aufweist; und einem zweiten Kanalblech, das zwischen dem Wärmeleitmodul und dem ersten Kanalblech angeordnet ist und eine dem ersten Kanalblech entsprechende Anordnung von durch Stege getrennten Aussparungen aufweist, wobei das zweite Kanalblech bezüglich des ersten Kanalblechs gedreht ist, so dass sich die Aussparungen des ersten Kanalblechs und die Stege des zweiten Kanalblechs gegenüberliegen, um einen durchgehenden Kanal zum Führen des Kühlmittels zu bilden.

Der Wärmeübertrager kann aus einem gut Wärme leitenden Material, beispielsweise einer Metallegierung, gefertigt sein und in einem Elektro- oder Hybridfahrzeug zur Kühlung der Akkumulatoren eingesetzt werden. Dabei kann der Wärmeübertrager in Form eines Stapels aus zwei Kanalblechen und einem Wärmeleitmodul gebildet sein. Der Stapel kann auch um weitere Kanalbleche oder weitere Deckbleche oder Zwischenbleche erweitert sein. Die Kanalbleche können baugleich sein und beispielsweise mittels eines geeigneten Stanzwerkzeugs gefertigt sein. Vorteilhafterweise kann ein und dasselbe Stanzwerkzeug zur Fertigung beider Kana!bieche eingesetzt werden. Die Aussparungen der Kanalbleche können zum Durchleiten, Zuführen, Abführen und/oder Sammeln des Kühlmittels ausgebildet sein. Bei dem Kühlmittel kann es sich um ein geeignetes Fluid handeln. Je nach Verwendungszweck können die einzelnen Aussparungen unterschiedliche Größen und Formen aufessen. Aussparungen zum Bilden des durchgehenden Kanals können in Bezug auf eine vorgesehene Flussrichtung des Kühlmittels länglich ausgebildet sein und durch Stege getrennt aneinandergereiht sein. Es können auch Aussparungen zur Bildung mehrrere durchgehender Kanäle vorgesehen sein. In Bezug auf eine quer zur Hauptrichtung des durchgehenden Kanals gerichtete Mittelachse der Kanalbleche können die Aussparungen unsymmetrisch angeordnet sein. So kann der durchgehende Kanal gebildet werden, indem das zweite Kanalblech gegenüber dem ersten Kanalblech an der Mittelachse oder einer anderen Längsachse um 180 Grad gedreht angeordnet wird. Durch die sich jeweils gegenüberliegenden Stege und Aussparungen der aneinandergrenzenden Kanalbleche kann der mäanderförrnige Kanal zum Führen des Kühlmittels gebildet werden. Die Stege können dabei neben einer Stabilisierungsfunktion für das Kanalblech zusätzlich zu einer Verwirbelung des die Stege umströmenden Kühlmittels beitragen. Dies kann eine Verbesserung des Wärmeübergangskoerffizienten zur Folge haben, Zuunterst des Stapels ist im Allgerneinen ein Deckblech zur Abdeckung des untersten Kanalblechs angeordnet, so dass kein Kühlmittel aus dem Wärmeübertrager entweichen kann. Der modulare Stapel aus Kanalblechen und Wärmeleitmodul kann nach außen fluiddicht abgeschlossen sein, Bei der elektrochemischen Energiespeichereinheit kann es sich z,B. um ein Paket von Lithium-lonen-Zellen handeln, die so nebeneinander angeordnet sind, dass sie von den Erhebungen des Wärmeleitmoduls aufgenommen und gehalten werden können. Die Anordnung der Erhebungen auf der Grundplatte kann an eine Form der aufzunehmenden Energiespeichereinheit angepasst sein. Alternativ zur Energiespeichereinheit kann der Wärmeübertrager auch zur Kühlung oder Erwärmung anderer Einrichtungen eingesetzt werden.

Gemäß einer Ausführungsform kann eine Länge jeder der Mehrzahl von Erhebungen weniger als einer Hälfte einer Höhe der mindestens einen elektrochemischen Energiespeichereinheit entsprechen, Beispielsweise kann die Länge einem Drittel der Höhe der Energiespeichereinheit entsprechen. Vorteilhafterweise kann so Material eingespart werden, wobei eine ausreichende Fixierung der elektrochemischen Energiespeichereinheit an dem Wärmeübertrager gewährleistet ist Auch kann eine derartige Bauform ein Einsetzen und Entnehmen der elektrochemischen Energiespeichereinheit erleichtern.

insbesondere kann jede der Mehrzahl von Erhebungen in dem Endbereich einen größeren Querschnitt aufweisen als in einem von der Grundplatte augewandten Bereich, Der größere Querschnitt kann sich beispielsweise über eine der Länge der Erhebungen erstrecken, Durch das Plus an Material in dem Endbereich kann der Vorteil einer besseren Wärmeableitung aus der elektrochemischen Energiespeichereinheit erreicht werden. Dies ist insofern von Bedeutung als bei den galvanischen Zellen die Wärmeleitfähigkeit im Bodenbereich oder Kopfbereich der Zelle besonders gering ist, da hier der Zeilwickel zumeist nicht mehr für die Wärmeleitung zur Verfügung steht.

Gemäß alternativen Ausführungsformen kann die Mehrzahl von Erhebungen als Stäbe oder als parallel angeordnete Wände ausgebildet sein. Bei einer Realisierung der Erhebungen als Stäbe Kann der Wätmeübertrager so z.B. zum Kühlen von Rundzellen und bei einer Realisierung der Erhebungen als Wände z.B. zum Kühlen von Flachzellen verwendet werden. Es können mehrere unterschiedlich ausgeformte Wärmeleitmodule nebeneinander auf den Kanalblechen angeordnet werden. Auf diese Weise kann der Wärmeübertrager aufgrund seiner modularen Bauweise mit kostengünstigem Aufwand für verschiedene Bauformen von Zellen eingesetzt werden.

Dabei kann jeder der Mehrzahl von Stäben einen dreieckigen oder alternativ einen runden Querschnitt aufweisen. Stäbe mit einem runden Querschnitt sind besonders einfach zu fertigen und auch zur Aufnahme von elektrochemischen Energiespeichereinheiten mit komplexen geometrischen Formen, beispielsweise einem Vieleck, geeignet. Ein dreieckiger Querschnitt hingegen bietet bei einer Verwendung von Rurdzellen den Vorteil eines besonders hohen Wärme-übergangskoefrizienten, da eine Grenzfläche der Erhebung mit einer Ummantelung der Zelle höher ist Andere Querschnitte sind ebenso möglich.

Gemäß. einer Ausführungsform kann die Grundplatte des Wärmeleitmoduls mindestens eine Aussparung zum Kontaktieren der mindestens einen elektrochemischen Energiespechereinheit aufweisen, Auf diese Weise kann eine elektrische Kontaktierung einer Zelle oder Einzeizelle auf einfache Weise durch die Grundplatte hindurch durchgeführt werden. Alternativ eignet sich die mindestens eine Aussparung auch, um ein Entlüften der Battetiezellen im Versagensfall zu ermöglichen.

Gemäß einer weiteren Ausführungsform können die Aussparungen des ersten Kanalblechs und/oder des zweiten Kanalblechs eine Form eines Parallelogramms mit mindestens einem stumpfen Winkel ausbilden. Entsprechend einer derartigen Form der Aussparungen sind die dazwischenliegenden Stege in Bezug auf eine Hauptflussrichtung des Kühlmittels schräg in dem Kanalblech angeordnet. Dies hat den Vorteil, dass die Turbu!atorfunkt{on der Stege noch weiter verbessert werden kann. Aufgrund der gesteigerten Verwirbelung des Kühlmittels kann der Wärmeübergangskoeffizient noch weiter erhöht werden.

Weiterhin kann der Wärmeübertrager ein Deckblech aufweisen, das zwischen dem und dem zweiten Kanalblech angeordnet ist. Das Deckblech kann ausgebildet sein, um die Aussparungen des zweien Kanalblechs abzudecken. Ein Einsatz eines derartigen Deckblechs kann sinnvoll sein, wenn die Größe des Wärmeleitmoduls nicht ausreichend ist, um die Aussparungen der darunterliegenden Kanalplatte vollständig abzudecken.

Die vorliegende Erfindung schafft ferner ein Herstellungsverfahren für ein Wärmeleitmodul zum Aufnehmen von Wärme von mindestens einer elektrochemi schen Energiespeichereinheit, das eine Grundplatte und eine Mehrzahl von Erhebungen die jeweils mit einem Endbereich mit einer Hauptfläche der Grundplatte verbunden und so voneinander beabstandet sind, dass die mindestens eine elektrochemische Energiespeichereinheit zwischen benachbarten Erhebungen angeordnet sein kann, wobei das Wärmeleitmodul einstückig mittels eines Fließpressverfahrens oder eines Gussverfahrens hergestellt wird.

Das Wärmeleitmodul kann im Zusammenhang mit dem erfindungsgemäßen Wärmeübertrager eingesetzt werden, Die im Zusammenhang mit dem Wärmeübertrager beschriebenen Ausführungsformen des Wärmeleitmoduls können mit dem erfindungsgemäßen Herstellungsverfahren realisiert werden. Die Verwendung eines Fließpressverfahrens oder Gussverfahrens bietet den Vorteil, dass die Erhebungen nicht nachträglich gegenüber der Grundplatte ausgerichtet und in diese eingesetzt werden müssen. Auch kann das Wärmeleitmodul hinsichtlich der Ausführungsform der Verbreiterungen der Erhebungen in dem Bereich des Übergangs zu der Grundplatte in einem einzigen Arbeitsgang hergestellt werden. Auf einen kosten- und zeitintensiven Einsatz von spanabhebenden Werkzeugen kann verzichtet werden.

Die vorliegende Erfindung schafft ferner eine Wärmeleiteinheit zum Aufnehmen von Wärme von mindestens einer elektrochemischen Energiespeichereinheit, mit folgendem Merkmal: mindestens zwei Wärmeleitmodulen, die jeweils eine Grundplatte und eine Mehrzahl von Erhebungen aufweisen, die jeweils mit einem Endbereich mit einer Hauptfläche der Grundplatte verbunden und so voneinander beabstandet sind, dass die mindestens eine elektrochemische Energiespeichereinheit zwischen benachbarten Erhebungen angeordnet sein kann, wobei die mindestens zwei Wärmeleitmodule in einer Ebene nebeneinander angeordnet sind.

Die können mit dem erfindungsgemäßen Herstellungsverfahren oder anderen geeigneten Herstellungsverfahren hergestellt werden. Die modulare Bauweise der Wärmeleiteinheit ist vorteilhaft. Beispielsweise kann die Wärmeleiteiheit ohne weiteres auf eine beliebige Größe der zu kühlenden elektrochemischen Energiespeichereinheit und/oder eine beliebige Anzahl von benachbart zueinander angeordneten elektrochemischen Energiespeicherein" heiten angepasst werden, indem eine geeignete Anzahl von Wärmeleitmodulen zum Einsatz kommt Da die Wärmeleitmodule Gleichteile sind, können so die Produktionskosten sowie die Produktionsdauer gekürzt werden. Alternativ können auch unterschiedlich ausgeformte Wärmeleitmodule kombiniert werden,

Vorteilhafte Ausführungsbeispiele der vorliegenden Erfindung werden nachfolgend Bezug nehmend auf die belegenden Zeichnungen näher erläutert. Es zeigen:
- Fig. 1: eine perspektivische Darstellung eines Wärmeleitmoduls gemäß einem Ausführungsbeispiel der vorliegenden Erfindung;
- Fig. 2: eine perspektivische Darstellung eines Wärmeleitmoduls gemäß einem weiteren Ausführungsbeispiel der vorliegenden Erfindung;
- Fig. 3: eine perspektivische Darstellung eines Kanalblechs gemäß einem Ausführungsbeispiel der vorliegenden Erfindung;
- Fig. 4: eine schematische Draufsicht auf einen Ausschnitt eines Kanals zum Führen eines Kühlmittels, gemäß einem Ausführungsbeispiel der vorliegenden Erfindung;
- Fig. 5: eine Schnittdarstellung entlang einer Schnittlinie A-A eines Kanals zum Führen eines Kühlmittels, gemäß einem Ausführungsbeispiel der vorliegenden Erfindung; und
- Fig. 6: eine perspektivische Explosionsdarstellung eines Wärmeübertragers gemäß einem Ausführungsbeispiel der vorliegenden Erfindung.

In der nachfolgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet, wobei eine wiederholte Beschreibung dieser Elemente weggelassen wird,

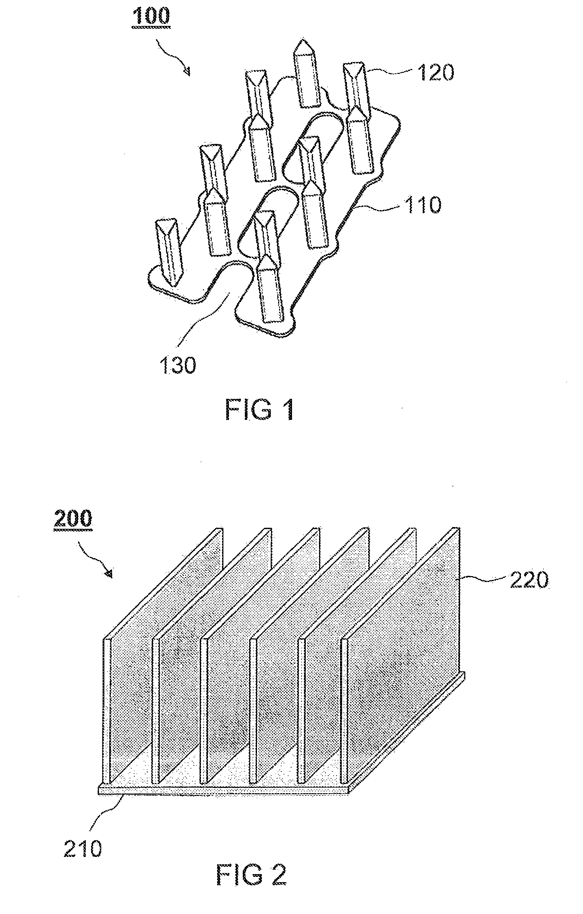

Fig. 1 zeigt eine perspektivische Darstellung eines Wärmeleitmoduls 100 gemäß einem Ausführungsbeispiel der vorliegenden Erfindung, Gezeigt sind eine Grundplatte 110 sowie eine Mehrzahl von Stäben oder Pins 120. Der Übersichtlichkeit halber ist lediglich einer der Stäbe 120 mit einem Bezugszeichen gekennzeichnet Die Grundplatte 110 weist längliche Aussparungen 130 auf, von denen jede zum Durchführen von elektrischen Kontakten einer Zelle einer elektrochemischen Energiespeichereinheit ausgebildet sein kann. Die Stäbe oder Pins 120 gemäß dem in Fig. 1 gezeigten Ausführungsbeispiel weisen einen dreieckigen Querschnitt auf und sind beabstandet voneinander im rechten Winkel auf der Grundplatte 110 angeordnet. Die Stäbe 120 sind bezüglich ihrer Dreieckform unterschiedlich ausgerichtet und sind so um die Aussparungen 130 der Grundplatte 110 herum angeordnet, dass bei einem Einsetzen einer elektrochemischen Energiespeichereinheit je eine Zelle oder Einzelzelle an jeweils einer Seitenfläche von sechs Stäben 120 anliegt und ein Boden der Zelle oder Einzelzelle jeweils eine Aussparung 130 bedeckt.

Ein erfindungsgemäßer Wärmeübertrager kann eine Mehrzahl von nebeneinander angeordneten Wärmeleitmodulen 100 aufweisen. Die Randlinie der Grundplatte 110 kann so ausgeformt sein, dass den Aussparungen 130 entsprechende Aussparungen ausgeformt werden, wenn zwei Wärmeleitmodule 100 aneinandergrenzend nebeneinander angeordnet werden, Entsprechend dazu können die Stäbe 120 im Randbereich des Wärmeleitmoduls 100 so angeordnet sein, dass sie zusammen mit Stäben 120 im Randbereich eines angrenzenden Wärmeleitmoduls 100 einen vollständigen Aufnahmerahmen für eine zwischen zwei Wärmeleitmodulen 100 angeordnete Energiespeichereinheit bilden,

Gemäß einem Ausführungsbeispiel werden die Wärmeleitelemmete nicht mehr einzeln auf einem Kühler angebracht, sondern in die modularen Untereinheiten 100 zusammengefasst. Diese modularen Untereinheiten bzw. Wärmeieitmodule 100 setzen sich z.B. aus vorgefertigten differentiellen Einzelteilen, also beispielsweise den Einzelstäben 120, die auf der Trägerplatte 110 verstemmt sind, zusammen, Alternativ kann das Wärmeleitmodul 100 auch durch ein integral dargestelltes Untermodul, z.B. ein Fließpressteil ausgeführt sein.

Ein einzelnes oder mehrere Wärmeleitmodule 100 können auf eine Kühlplatte gesetzt und vorzugsweise mit dieser verlötet werden. Die Länge der Pins 120 entspricht dabei nicht zwangsläufig der vollständigen Zellhöhe; eine durchschnitliche Vorzugsgeometrie ergibt sich bei ca. 1/3 der Zellhöhe. Die Pins 120 der Wärmeleitmodule 100 sind in der Art ausgeformt, dass sie ausreichend Material mit hoher Wärmeleifähigkeit entlang des Wärmeleitpfades einbringen, gleichzeitig jedoch auch einem Interfacematerial ausreichend Raum für eine zulässige Verarbeitung lassen.

Die thermische Anbindung von Zellen an die Wärmeleitelemente 100 kann vorzugsweise über Stoffschluss, z.B. Verguss, erfolgen.

Fig. 2 zeigt eine perspektivische Darstellung eines Wärmeleitelements 200 für Flachzellen, gemäß einen, weiteren Ausführungsbeispiel der vorliegenden Erfindung. Gezeigt sind eine Grundplatte 210 sowie eine Mehrzahl von Wänden 220. Der Übersichtlichkeit halber ist lediglich eine der Wände 220 mit einem Bezugszeichen gekennzeichnet. Die Wände 220 sind gleichmäßig beabstandet voneinander im rechten Winkel parallel auf der Grundplatte 210 angeordnet und zum Aufnehmen von Flachzellen geeignet.

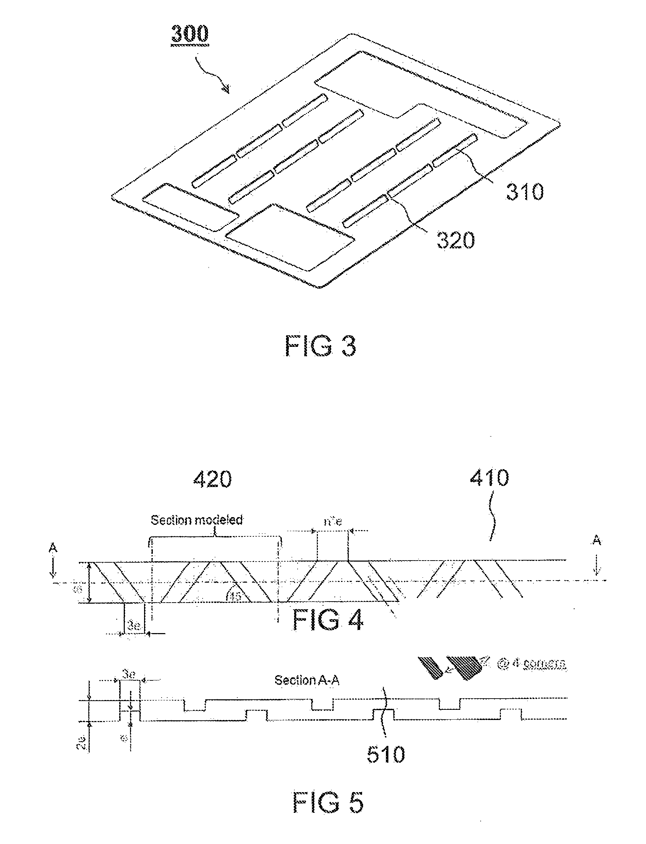

Fig, 3 zeigt eine perspektivische Darstellung eines Kanalblechs 300 gemäß einem Ausführungsbeispiel der vorliegenden Erfindung, Das Kanalblech 300 weist eine Mehrzahl von gleichförmigen länglichen Aussparungen 310 auf, die zu mehreren in Reihen angeordnet und durch Stege 320 getrennt sind. Der Übersichtlichkeit halber sind lediglich eine Aussparung 310 und ein Steg 320 mit einem Bezugszeichen versehen. Aus der Darstellung in Fig. 3 ist ersichtlich, dass die Aussparungen 310 und somit auch die Stege 320 schräg in dem Kanalblech 300 angeordnet sind. Auf diesen Aspekt wird in Zusammenhang mit Figuren 4 und 5 noch ausführlicher eingegangen. Die Aussparungen 310 sind ausgebildet, um von einem Kühlfluid durchströmt zu werden. In Fig. 3 nicht gezeigt ist, dass durch eine Stapelung des Kanalblechs 300 mit einem weiteren baugleichen Kanalblech, das gegenüber dem Kanalblech 300 an einer Längsachse um 180 Grad gedreht ist, sich jeweils eine Aussparung 310 und ein Steg 320 des Kanalblechs 300 und des weiteren Kanalblechs gegenüber liegen, so dass ein durchgehender geschlossener Kanal zum Führen des Kühlfluids in dem Kanalblech 300 und dem weiteren Kanalblech gebildet wird, Die Stege 320 dienen dabei nicht nur zur Stabilisierung des Kanalblechs 300 und des weiteren Kanalblechs, sondern fungieren auch als Turbulatoren, die durch eine Durchmischung des Kühlfluids zu einer Verbesserung des Wärmeübergangskoeffizienten beitragen können, Das Kanalblech 300 weist in zwei gegenüberliegenden Randbereichen weitere Aussparungen auf. Diese dienen ebenfalls im Zusammenspiel mit einem weiteren Kanalblech als Sammelbereiche für das Kühlfluid.

Fig. 4 zeigt eine schematische Draufsicht auf einen Ausschnitt eines Kanals zum Führen eines Kühlmittels, gemäß einem Ausführungsbeispiel der vorliegenden Erfindung. Gezeigt ist eine schräge Ausführung von zwischen Wänden des Kanals verlaufenden Stegen 410. Der Übersichtlichkeit halber ist lediglich einer der Stege 410 mit einem Bezugszeichen versehen. Die Stege 410 sind dabei so in dem Kanal angeordnet, dass bezüglich einer Kanalwand abwechselnd eine linke Kante eines Stegs 410 und eine rechte Kante eines benachbarten Stegs 410 in einem spitzen Winkel auf die Kanalwand auftreffen. Bei dem in Fig. 4 gezeigten Ausführungsbeispiel beträgt eine Größe des spitzen Winkels jeweils 45 Grad. Jeweils zwei benachbarte Stege 410 bilden einen Abschnitt 420 des gezeigten Kanalausschnitts. In Fig. 4 bezeichnet a eine Breite des dargestellten Kanals, 3e eine Breite eines Stegs 410 und n*e einen Abstand zwischen einem Seitenrand eines Stegs 410 und einem entsprechenden Seitenrand eines benachbarten Stegs 410. Eine Strichlinie A-A kennzeichnet einen Längsschnitt durch den dargestellten Kanalausschnitt.

Fig. 5 zeigt eine Schnittdarstellung entlang der in Fig. 4 gezeigten Schnittlinie A-A eines Kanals zum Führen eines Kühlmittels, gemäß einem Ausführungsbeispiel der vorliegenden Erfindung. Dabei bezeichnet 2e eine Höhe des abgebildeten Kanalausschnitts, 3e eine Breite eines Stegs 510 und e eine Höhe eines Stegs 510. Der Übersichtlichkeit halber ist lediglich einer der Stege 510 mit einem Bezugszeichen versehen, In Fig. 5 ist ein durch die Anordnung der Stege 510 mäanderförmiger Verlauf des dargestellten Kanals gut zu erkennen.

Die im Zusammenhang mit Figuren 4 und 5 illustrierte Möglichkeit einer schrägen Ausführung der Stege 410, 510 kann insbesondere für einphasige Strömungen vorteilhaft sein.

Die Anschrägung, insbesondere um 45 Grad erlaubt es, der Strömung des Kühlmittels einen Drall aufzuprägen, durch den der Wärmeübergang bei akzeptablem Druckverlust verbessert werden kann. Andere geeignete Winkel der Anschrägung sind ebenfalls möglich,

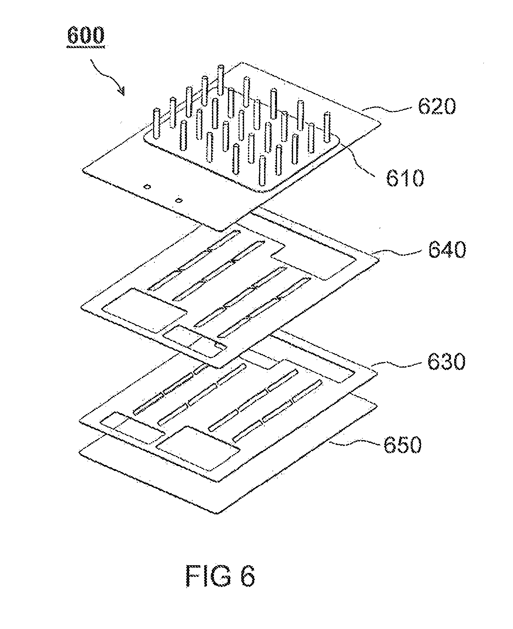

Fig. 6 zeigt in einer perspektivischen Explosionsdarstellung einen prinzipiellen Aufbau eines Wärmeübertragers gemäß einem Ausführungsbeispiel der vorliegenden Erfindung. Ein Wärmeübertrager 600 umfasst ein Wärmeleitmodul 610, ein Deckblech 620, ein erstes Kanalblech 630, ein zweites Kanalblech 640 sowie ein weiteres Deckblech 650. Das Wärmeleitmodul 610 ist in ähnlicher Weise wie das in Zusammenhang mit Fig. 1 erläuterte Wärmeleitmodul ausgeführt, mit dem Unterschied, das bei dem Warmeleitmodul 610 die Mehrzahl von Erhebungen in Form von Stäben mit rundem Querschnitt ausgebildet ist. Die Kanaibleche 630, 640 entsprechen dem in Zusammenhang mit Fig. 3 erläuterten Kanalblech, Die Kanalbleche 630, 640 sind Gleichteile.

Bei der in Fig. 6 gezeigten Ausführungsform des Wärmeübertragers 600 zur Kontaktkühlung von Festkörpern unter Zuhilfenahme von Wärmeleitelementen ist deutlich zu erkennen, dass das zweite Kanalbiech 640 gegenüber dem ersten Kanalblech 630 gedreht angeordnet ist. Ein z.B. durch Stoffschluss eizieltes fluiddichtes Aufeinanderliegen des Stapels aus dem Deckblech 620 mit dem Wärmeleitmodul 610, dem ersten Kanalblech 630, dem zweiten Kanalblech 640 sowie dem weiteren Deckblech 650 bildet mittels der Aussparungen in dem ersten 630 und zweiten 640 Kanalblech einen durchgehenden Kanal sowie Sammelbereiche für das Kühlmittel.

Gemäß einem in den Figuren nicht gezeigten alternativen Ausführungsbeispiel des hier vorgeschlagenen Wärmeübertragers kann das Warmeleitmodul gegebenenfalls als Deckblech für die Kanalstruktur der Kühlplatte ausgeführt sein, so dass ein eigenständiges Deckblech entfällt

Gemäß, weiteren alternativen und nicht dargestellten Ausführungsbeispielen kann auch eine Kühlplatte als Extrusionsteil mit Sammelkästen ausgeführt sein. Weiterhin kann ein wannenförmiger Standardplattenwärmeübertrager auf eine ebene Grundplatte aufgelötet sein. Bezüglich der Wärmeleitelemente ist eine differentielle Bauweise mit Einzelrippen statt Modulen denkbar.

Die beschriebenen Ausführungsbeispiele sind nur beispielhaft gewählt und können miteinander kombiniert werden.

## Patentansprüche

1. Wärmeübertrager (600) zum Übertragen von Wärme zwischen mindestens einer elektrochemischen Energiespeichereinheit und einem Kühlmittel, mit folgenden Merkmalen:
einem Wärmeleitmodul (100; 200; 610), das eine Grundplatte (110; 210) und eine Mehrzahl von Erhebungen (120; 220) aufweist, die jeweils mit einem Endbereich mit einer Hauptfläche der Grundplatte verbunden und so voneinander beabstandet sind, dass die mindestens eine elektrochemische Energiespeichereinheit zwischen benachbarten Erhebungen angeordnet sein kann;
einem ersten Kanalblech (300; 630), das eine Anordnung von durch Stege (320; 410; 510) getrennten Aussparungen (310) aufweist; und
einem zweiten Kanalblech (300; 640), das zwischen dem Wärmeleitmodul und dem ersten Kanalblech angeordnet ist und eine dem ersten Kanalblech entsprechende Anordnung von durch Stege getrennten Aussparungen aufweist, wobei das zweite Kanalblech bezüglich des ersten Kanalblechs gedreht ist, so dass sich die Aussparungen des ersten Kanalblechs und die Stege des zweiten Kanalblechs gegenüberliegen, um einen durchgehenden Kanal zum Führen des Kühlmittels zu bilden.

2. Wärmeübertrager (600) gemäß Anspruch 1, bei dem eine Länge jeder der Mehrzahl von Erhebungen (120; 220) weniger als einer Hälfte einer Höhe der mindestens einen elektrochemischen Energiespeichereinheit entspricht.

3. Wärmeübertrager (600) gemäß einem der vorangegangenen Ansprüche, bei dem jede der Mehrzahl von Erhebungen (120; 220) in dem Endbereich einen größeren Querschnitt als in einem von der Grundplatte (110; 210) abgewandten Bereich aufweist.

4. Wärmeübertrager (600) gemäß einem der vorangegangenen Ansprüche, bei dem die Mehrzahl von Erhebungen (120; 220) als Stäbe oder als parallel angeordnete Wände ausgebildet ist.

5. Wärmeübertrager (600) gemäß Anspruch 4, bei dem jeder der Mehrzahl von Stäben einen dreieckigen oder runden Querschnitt aufweist.

6. Wärmeübertrager (600) gemäß einem der vorangegangenen Ansprüche, bei dem die Grundplatte (110; 210) des Wärmeleitmoduls (100; 200; 610) mindestens eine Aussparung (130) zum Kontaktieren der mindestens einen elektrochemischen Energiespeichereinheit aufweist.

7. Wärmeübertrager (600) gemäß einem der vorangegangenen Ansprüche, bei dem die Aussparungen (310) des ersten Kanalblechs (300; 630) und/oder des zweiten Kanalblechs (300; 640) eine Form eines Parallelogramms mit mindestens einem stumpfen Winkel ausbilden.

8. Wärmeübertrager (600) gemäß einem der vorangegangenen Ansprüche, der ein Deckblech (620) aufweist, das zwischen dem Wärmeleitmodul (100; 200; 610) und dem zweiten Kanalblech (300; 640) angeordnet ist und ausgebildet ist, um die Aussparungen (310) des zweiten Kanalblechs abzudecken.

9. Wärmeübertrager nach einem der vorhergehenden Ansprüche, wobei das Wärmeleitmodul (100; 200; 610) zum Aufnehmen von Wärme von mindestens einer elektrochemischen Energiespeichereinheit derart ausgebildet ist, dass es eine Grundplatte (110; 210) und eine Mehrzahl von Erhebungen (120; 220) aufweist, die jeweils mit einem Endbereich mit einer Hauptfläche der Grundplatte verbunden und so voneinander beabstandet sind, dass die mindestens eine elektrochemische Energiespeichereinheit zwischen benachbarten Erhebungen angeordnet sein kann, wobei das Wärmeleitmodul einstückig mittels eines Fließpressverfahrens oder eines Gussverfahrens hergestellt ist.
\

## Claims

1. Heat exchanger (600) for transferring heat between at least one electrochemical energy storage unit and a coolant, having the following characteristics:
a heat conducting module (100; 200; 610) having a base plate (110; 210) and a plurality of elevations (120; 220), each being connected at an end region with a main surface of the base plate, and are spaced from each other such that the at least one electrochemical energy storage unit may be disposed between adjacent elevations;
a first channel sheet (300; 630) having an arrangement of recesses (310) being separated by bars (320; 410; 510); and
a second channel sheet (300; 640) being disposed between the heat conducting module and the first channel sheet, and having an arrangement of recesses separated by bars, corresponding to the first channel sheet, wherein the second channel sheet is rotated with respect to the first channel sheet such that the recesses of the first channel sheet and the bars of the second channel sheet face each other in order to form a continuous channel for guiding the coolant.

2. Heat exchanger (600) according to claim 1, wherein a length of each of the pluralities of elevations (120; 220) corresponds to less than half of a height of the at least one electrochemical energy storage unit.

3. Heat exchanger (600) according to one of the previous claims, wherein each of the pluralities of elevations (120; 220) has a larger cross-section in the end region, than in an area facing away from the base plate (110; 210).

4. Heat exchanger (600) according to one of the previous claims, wherein the plurality of elevations (120; 220) is embodied as bars or as walls being disposed in a parallel manner.

5. Heat exchanger (600) according to claim 4, wherein each of the pluralities of bars has a triangular or round cross-section.

6. Heat exchanger (600) according to one of the previous claims, wherein the base plate (110; 210) of the heat conducting module (100; 200; 610) has at least one recess (130) for contacting the at least one electrochemical energy storage unit.

7. Heat exchanger (600) according to one of the previous claims, wherein the recesses (310) of the first channel sheet (300; 630) and/or of the second channel sheet (300; 640) form the shape of a parallelogram with at least one obtuse angle.

8. Heat exchanger (600) according to one of the previous claims, having a cover sheet (620) being disposed between the heat conducting module (100; 200; 610) and the second channel sheet (300; 640), and is embodied such to cover the recesses (310) of the second channel sheet.

9. Heat exchanger according to one of the previous claims, wherein the heat conducting module (100; 200; 610) is embodied for receiving heat from at least one electrochemical energy storage unit such that the same has a base plate (100; 210) and a plurality of elevations (120; 220) which are each connected at one end region with a main surface of the base plate, and are spaced from each other such that the at least one electrochemical energy storage unit may be disposed between adjacent elevations, wherein the heat conducting module is produced as one piece by means of an impact extrusion method or by means of a casting method.

## Revendications

1. Echangeur de chaleur (600) servant à la transmission de chaleur entre au moins un ensemble accumulateur d'énergie électrochimique et un moyen de refroidissement et ayant les caractéristiques suivantes:
un module conducteur de la chaleur (100; 200; 610) qui présente une plaque de base (110; 210) et une pluralité d'éléments en élévation (120; 220) qui sont respectivement reliés, par une zone d'extrémité, à une surface principale de la plaque de base et espacés les uns des autres de manière telle, que l'ensemble accumulateur d'énergie électrochimique au moins au nombre de un puisse être disposé entre des éléments en élévation voisins;
une première tôle de canal (300; 630) qui présente un agencement d'évidements (310) séparés par des barrettes (320; 410; 510);
une deuxième tôle de canal (300; 640) qui est disposée entre le module conducteur de la chaleur et la première tôle de canal et présente un agencement d'évidements séparés par des barrettes, correspondent à celui de la première tôle de canal, où la deuxième tôle de canal est tournée par rapport à la première tôle de canal, de sorte que les évidements de la première tôle de canal et les barrettes de la deuxième tôle de canal se font face, pour former un canal continu servant au guidage du moyen de refroidissement.

2. Echangeur de chaleur (600) selon la revendication 1, dans lequel une longueur de chacune des pluralités d'éléments en élévation (120; 220) correspond à moins d'une moitié d'une hauteur de l'ensemble accumulateur d'énergie électrochimique au moins au nombre de un.

3. Echangeur de chaleur (600) selon l'une ou l'autre des revendications précédentes, dans lequel chacune des pluralités d'éléments en élévation (120; 220) présente, dans la zone d'extrémité, une section plus grande que celle située dans une zone placée à l'opposé de la plaque de base (110; 210).

4. Echangeur de chaleur (600) selon l'une quelconque des revendications précédentes, dans lequel la pluralité d'éléments en élévation (120; 220) est configurée comme des broches ou des parois disposées de façon parallèle.

5. Echangeur de chaleur (600) selon la revendication 4, dans lequel chacune des pluralités de broches présente une section triangulaire ou ronde.

6. Echangeur de chaleur (600) selon l'une quelconque des revendications précédentes, dans lequel la plaque de base (110; 210) du module conducteur de la chaleur (100; 200; 610) présente au moins un évidement (130) servant à la métallisation de l'ensemble accumulateur d'énergie électrochimique au moins au nombre de un.

7. Echangeur de chaleur (600) selon l'une quelconque des revendications précédentes, dans lequel les évidements (310) de la première tôle de canal (300; 630) et/ou de la deuxième tôle de canal (300; 640) ont la forme d'un parallélogramme ayant au moins un angle obtus.

8. Echangeur de chaleur (600) selon l'une quelconque des revendications précédentes, qui présente une tôle de recouvrement (620) qui est disposée entre le module conducteur de la chaleur (100; 200; 610) et la deuxième tôle de canal (300; 640) et est configurée pour recouvrir les évidements (310) de la deuxième tôle de canal.

9. Echangeur de chaleur selon l'une quelconque des revendications précédentes, où le module conducteur de la chaleur (100; 200; 610) est configuré pour recevoir de la chaleur provenant d'au moins un ensemble accumulateur d'énergie électrochimique, de manière telle que ledit module conducteur de la chaleur présente une plaque de base (110; 210) et une pluralité d'éléments en élévation (120; 220) qui sont respectivement reliés, par une zone d'extrémité, à une surface principale de la plaque de base et espacés les uns des autres de manière telle, que l'ensemble accumulateur d'énergie électrochimique au moins au nombre de un puisse être disposé entre des éléments en élévation voisins, où le module conducteur de la chaleur est fabriqué de façon monobloc, au moyen d'un procédé d'extrusion ou d'un procédé de moulage.
